# EUROPEAN PATENT APPLICATION

(11) **EP 3 135 735 A1**
(43) Date of publication of application: **01.03.2017**
(21) Application number: 14889916.4
(22) Date of filing: 26.11.2014
(51) Int. Cl.: C09C 1/48, B60C 1/00, C08K 3/04, C08L 21/00

(54) **CARBON BLACK AND RUBBER COMPOSITION**

(30) Priority: 22.04.2014 JP 2014088253
(71) Applicant: Tokai Carbon Co., Ltd., Minato-ku Tokyo 107-8636 (JP)
(72) Inventor: KURISU Kengo, Tokyo 107-8636 (JP); UCHIYAMA Hiroki, Tokyo 107-8636 (JP)
(74) Representative: Müller-Boré & Partner Patentanwälte PartG mbB
(86) International application number: PCT/JP2014/081165
(87) International publication number: WO 2015/162814

(57) **Abstract**

A novel carbon black can improve rubber properties (e.g., degree of reinforcement and heat buildup). The carbon black has an aggregate void modal diameter Dmp determined by mercury porosimetry of 25 to 60 nm, and has a ratio (ΔDmp/modal diameter Dmp) of a half-width ΔDmp of an aggregate void diameter distribution determined by mercury porosimetry to the aggregate void modal diameter Dmp of 0.30 to 0.56.

## Description

### TECHNICAL FIELD

The present invention relates to carbon black that can provide a rubber with low heat buildup, and may particularly suitably be used for a rubber for producing a tire tread that is used under severe travel conditions, and a rubber composition.

### BACKGROUND ART

Various types of carbon black that differ in properties are used for rubber reinforcement applications. Since the properties of the carbon black are major factors that determine the performance of the resulting rubber, carbon black having properties suitable for the target application is selectively used for a rubber composition.

For example, high-structure hard carbon black (e.g., SAF (N110) or ISAF (N220)) having a small primary particle size and a large specific surface area is used for a rubber member (e.g., tire tread) for which a high degree of reinforcement is required. However, a rubber obtained using a rubber composition that includes such high-structure hard carbon black is highly reinforced, but tends to exhibit high heat buildup.

In recent years, development of fuel-efficient tires has been increasingly desired in order to address a social need for saving resources and energy, and a rubber composition that achieves low heat buildup suitable for fuel-efficient tires has been extensively developed. Low heat buildup is normally achieved by adding carbon black having a large particle size (i.e., equivalent diameter of secondary particles formed by aggregation and fusion of primary particles) and a small specific surface area to a rubber composition.

A rubber that is highly reinforced and exhibits low heat buildup is required to produce the tread of fuel-efficient tires. However, since carbon black that is used to improve the degree of reinforcement and carbon black that is used to improve heat buildup completely differ in particle size and specific surface area, and have a trade-off relationship, it is difficult to obtain the desired rubber composition by adjusting the particle size and the specific surface area of the carbon black.

In order to deal with the above problem, technology has been proposed that improves rubber properties (e.g., degree of reinforcement and heat buildup) by microscopically evaluating the colloidal properties of carbon black in addition to the particle size, the specific surface area, the structure, and the like (that have been regarded as important as the basic properties of carbon black used for rubber reinforcement applications), and adding carbon black having specific properties to a rubber component (see Patent Literature 1 (JP-A-62-192468), for example).

### CITATION LIST

### PATENT LITERATURE

Patent Literature 1: JP-A-62-192468

### SUMMARY OF INVENTION

### TECHNICAL PROBLEM

In view of the above situation, an object of the invention is to provide a novel carbon black that can improve rubber properties (e.g., degree of reinforcement and heat buildup), and a rubber composition that exhibits improved rubber properties (e.g., degree of reinforcement and heat buildup).

### SOLUTION TO PROBLEM

The inventors conducted extensive studies in order to solve the above technical problem. As a result, the inventors found that the above technical problem can be solved by carbon black in which the aggregate void modal diameter Dmp (nm) determined by mercury porosimetry, and the ratio (half-width ΔDmp of aggregate void diameter distribution/aggregate void modal diameter Dmp) of the half-width ΔDmp (nm) of the aggregate void diameter distribution determined by mercury porosimetry to the aggregate void modal diameter Dmp (nm), satisfy a specific relationship. This finding has led to the completion of the invention.

Specifically, several aspects of the invention provide the following.
(1) Carbon black having an aggregate void modal diameter Dmp determined by mercury porosimetry of 25 to 60 nm, and having a ratio (half-width ΔDmp of aggregate void diameter distribution/aggregate void modal diameter Dmp) of a half-width ΔDmp of an aggregate void diameter distribution determined by mercury porosimetry to the aggregate void modal diameter Dmp of 0.30 to 0.56.
(2) The carbon black according to (1), the carbon black having a specific surface area by nitrogen adsorption of 60 to 180 m²/g and a DBP absorption of 90 to 140 ml/100 g.
(3) A rubber composition including a rubber component, and the carbon black according to (1) in a ratio of 30 to 100 parts by mass based on 100 parts by mass of the rubber component.
(4) A rubber composition including a rubber component, and the carbon black according to (2) in a ratio of 30 to 100 parts by mass based on 100 parts by mass of the rubber component.

Note that the term (ratio) "half-width ΔDmp of aggregate void diameter distribution/aggregate void modal diameter Dmp" is hereinafter appropriately referred to as "ΔDmp/modal diameter Dmp", the term "half-width ΔDmp of aggregate void diameter distribution" is hereinafter appropriately referred to as "ΔDmp", and the term "aggregate void modal diameter Dmp" is hereinafter appropriately referred to as "modal diameter Dmp".

### ADVANTAGEOUS EFFECTS OF INVENTION

Several aspects of the invention thus provide a novel carbon black that can improve rubber properties (e.g., degree of reinforcement and heat buildup), and a rubber composition that exhibits improved rubber properties (e.g., degree of reinforcement and heat buildup).

### BRIEF DESCRIPTION OF DRAWINGS

FIG. 1 is a view illustrating the aggregate void diameter distribution of carbon black according to one embodiment of the invention, and the aggregate void diameter distribution of known carbon black.
FIG. 2 is a schematic cross-sectional view illustrating an example of a fluidized-bed reactor that is used to produce carbon black according to one embodiment of the invention.
FIG. 3 illustrates the relationship between the aggregate void modal diameter Dmp and the ratio "ΔDmp/modal diameter Dmp" of the carbon blacks 1 to 10 obtained in Examples 1 to 10 and the comparative carbon blacks 1 to 8 obtained in Comparative Examples 1 to 8.
FIG. 4 illustrates the dynamic storage modulus (E') and the loss factor (tanδ) of the vulcanized rubber obtained using each carbon black (i.e., the carbon blacks 1 to 10 obtained in Examples 1 to 10 and the comparative carbon blacks 1 to 8 obtained in Comparative Examples 1 to 8).

Carbon black according to one embodiment of the invention is described below.

The carbon black according to one embodiment of the invention has an aggregate void modal diameter Dmp determined by mercury porosimetry of 25 to 60 nm, and has a ratio (half-width ΔDmp of aggregate void diameter distribution/aggregate void modal diameter Dmp) of a half-width ΔDmp of an aggregate void diameter distribution determined by mercury porosimetry to the aggregate void modal diameter Dmp of 0.30 to 0.56.

The carbon black according to one embodiment of the invention has an aggregate void modal diameter Dmp determined by mercury porosimetry of 25 nm or more, preferably 30 nm or more, and more preferably 35 nm or more. The carbon black according to one embodiment of the invention has an aggregate void modal diameter Dmp determined by mercury porosimetry of 60 nm or less, preferably 55 nm or less, and more preferably 50 nm or less.

The term "aggregate void modal diameter Dmp" used herein refers to the modal diameter of the distribution (aggregate void diameter distribution) of the diameters of voids formed between aggregates in which carbon black primary particles are fused and bonded in an irregular and complex manner. The modal diameter is an index that represents the form, the size, the distribution state, and the like of the aggregates.

The carbon black according to one embodiment of the invention having an aggregate void modal diameter Dmp determined by mercury porosimetry that falls within the above range essentially has a high aggregate structure (high structure). It is considered that the carbon black according to one embodiment of the invention thus exhibits an improved interaction with a rubber polymer when mixed with a rubber, and a large network of carbon black aggregates is formed within the rubber composition, so that the rubber composition is sufficiently reinforced, and an increase in heat buildup is advantageously suppressed.

Carbon black having an aggregate void modal diameter Dmp that falls within the above range may be produced by feeding a hydrocarbon gas to a fluidized-bed reactor to produce a gas stream, separately introducing raw material carbon black (e.g., HAF (N330) or ISAF (N220)) having a small primary particle size, a large surface area, and a high structure into the fluidized-bed reactor, and stirring and fluidizing the raw material carbon black using the gas stream with heating, for example.

Note that the term "aggregate void modal diameter Dmp" used herein refers to a modal void diameter determined by drying carbon black pellets having a particle size of 250 to 500 µm in accordance with JIS K 6218 ("Testing methods of incidental properties of carbon black for rubber industry") to prepare a sample, charging a dedicated cell (3 cm³) of a mercury porosimeter ("AutoPore IV 9500" manufactured by Micromeritics) with 0.14 g of the sample, measuring the capacitance between mercury within the cell and an electrode provided outside the cell while applying a pressure of 25 to 30,000 psi to the mercury within the cell, and determining the aggregate void diameter distribution from the amount of mercury introduced into the sample (that is calculated from a change in capacitance).

The carbon black according to one embodiment of the invention preferably has a half-width ΔDmp of the aggregate void diameter distribution determined by mercury porosimetry of 12 nm or more, more preferably 13 nm or more, and still more preferably 14 nm or more. The carbon black according to one embodiment of the invention preferably has a half-width ΔDmp of the aggregate void diameter distribution determined by mercury porosimetry of 24 nm or less, more preferably 22 nm or less, and still more preferably 20 nm or less.

When the carbon black according to one embodiment of the invention has a half-width ΔDmp of the aggregate void diameter distribution determined by mercury porosimetry that falls within the above range, it is possible to easily control the ratio "ΔDmp/modal diameter Dmp" (described below) within the desired range.

Carbon black having a half-width ΔDmp of the aggregate void diameter distribution that falls within the above range may be produced by feeding a hydrocarbon gas to a fluidized-bed reactor to produce a gas stream, separately introducing raw material carbon black (e.g., HAF (N330) or ISAF (N220)) having a small primary particle size, a large surface area, and a high structure into the fluidized-bed reactor, and stirring and fluidizing the raw material carbon black using the gas stream with heating.

Note that the term "half-width ΔDmp of the aggregate void diameter distribution" used herein refers to the difference between two aggregate void diameters that correspond to a frequency of 50% with respect to the highest frequency in the aggregate void diameter distribution obtained when the aggregate void modal diameter Dmp is determined using the method described above.

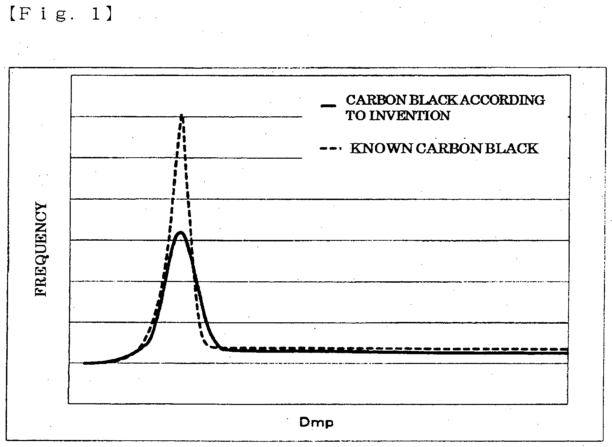

FIG. 1 illustrates the aggregate void diameter distribution of the carbon black according to one embodiment of the invention, and the aggregate void diameter distribution of known carbon black. As illustrated in FIG. 1, the carbon black according to one embodiment of the invention has a relatively broad distribution as compared with the known carbon black, and has a large half-width ΔDmp of the aggregate void diameter distribution as compared with the known carbon black.

The carbon black according to one embodiment of the invention has a ratio (ΔDmp/modal diameter Dmp) of the half-width ΔDmp of the aggregate void diameter distribution determined by mercury porosimetry to the aggregate void modal diameter Dmp determined by mercury porosimetry of 0.30 or more, and preferably 0.31 or more. The carbon black according to one embodiment of the invention has a ratio (ΔDmp/modal diameter Dmp) of the half-width ΔDmp of the aggregate void diameter distribution determined by mercury porosimetry to the aggregate void modal diameter Dmp determined by mercury porosimetry of 0.56 or less, preferably 0.50 or less, and more preferably 0.45 or less.

The carbon black according to one embodiment of the invention having an aggregate void modal diameter Dmp determined by mercury porosimetry that falls within the above range, and having a ratio (ΔDmp/modal diameter Dmp) of the half-width ΔDmp of the aggregate void diameter distribution determined by mercury porosimetry to the aggregate void modal diameter Dmp determined by mercury porosimetry that falls within the above range, can sufficiently reinforce a rubber composition (rubber) when used as a component of a rubber composition, and advantageously suppress an increase in heat buildup.

The carbon black according to one embodiment of the invention preferably has a specific surface area by nitrogen adsorption of 60 m²/g or more, more preferably 70 m²/g or more, and still more preferably 75 m²/g or more. The carbon black according to one embodiment of the invention preferably has a specific surface area by nitrogen adsorption of 180 m²/g or less, more preferably 170 m²/g or less, and still more preferably 160 m²/g or less.

When the carbon black according to one embodiment of the invention has a specific surface area by nitrogen adsorption that falls within the above range, the carbon black according to one embodiment of the invention can easily and sufficiently reinforce a rubber composition (rubber) when used as a component of a rubber composition, and advantageously suppress an increase in heat buildup.

Note that the term "specific surface area by nitrogen adsorption" used herein refers to a value measured (based on nitrogen adsorption number) in accordance with JIS K 6217-2:2001 ("Testing methods of fundamental characteristics of carbon black for rubber industry").

The carbon black according to one embodiment of the invention preferably has a dibutyl phthalate (DBP) absorption of 90 ml/100 g or more, more preferably 95 ml/100 g or more, and still more preferably 100 ml/100 g or more. The carbon black according to one embodiment of the invention preferably has a DBP absorption of 140 ml/100 g or less, more preferably 135 ml/100 g or less, and still more preferably 130 ml/100 g or less.

When the carbon black according to one embodiment of the invention has a DBP absorption that falls within the above range, the carbon black according to one embodiment of the invention can be advantageously dispersed and can sufficiently reinforce a rubber composition (rubber) when used as a component of a rubber composition. Moreover, the carbon black according to one embodiment of the invention can suppress an increase in viscosity, and easily provide the rubber composition with sufficient processability.

Note that the term "DBP absorption" used herein refers to a value measured in accordance with JIS K 6217-4:2008 ("Testing methods of fundamental characteristics of carbon black for rubber industry").

A method for producing the carbon black according to one embodiment of the invention is described below.

The carbon black according to one embodiment of the invention may be produced using an arbitrary method. For example, the carbon black according to one embodiment of the invention may be produced using a method that feeds a hydrocarbon gas to a fluidized-bed reactor to produce a gas stream, separately introduces raw material carbon black into the fluidized-bed reactor, and stirs and fluidizes the raw material carbon black using the gas stream with heating (hereinafter referred to as "production method A").

The hydrocarbon gas that is fed to the fluidized-bed reactor when implementing the production method A may be one or more hydrocarbon gases selected from an aromatic hydrocarbon gas (e.g., benzene, toluene, xylene, naphthalene, and anthracene), and the like.

A commercially-available product may be appropriately selected as the raw material carbon black used when implementing the production method A, for example. It is preferable to appropriately select hard carbon black (e.g., HAF (N330) or ISAF (N220)) having a small primary particle size, a large surface area, and a high structure as the raw material carbon black.

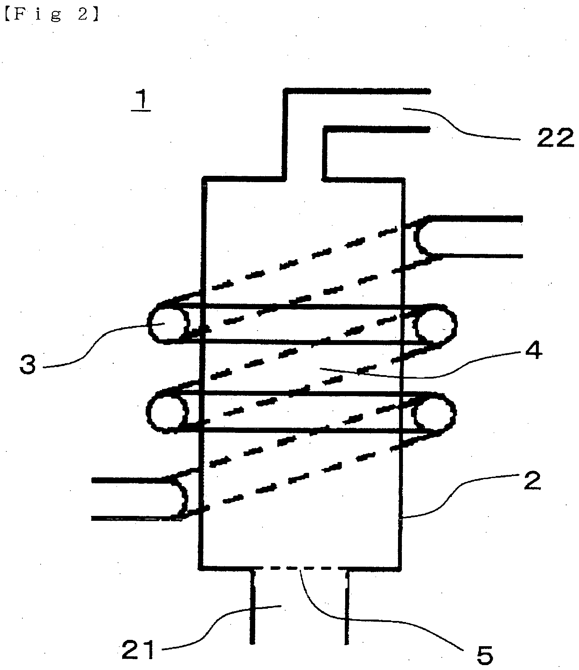

Examples of the fluidized-bed reactor used when implementing the production method A include a fluidized-bed reactor as illustrated in FIG. 2.

A fluidized-bed reactor 1 illustrated in FIG. 2 has an approximately cylindrical shape, and is configured so that the reactor axis extends in the vertical direction.

The fluidized-bed reactor 1 illustrated in FIG. 2 has a gas inlet 21 which is provided to the lower part of a reactor main body 2 and through which the hydrocarbon gas is fed upward, and an outlet 22 that is provided to the upper part of the reactor main body 2. As illustrated in FIG. 2, the fluidized-bed reactor 1 has a heater coil 3 that is formed by helically winding a heating wire around the entire outer wall (periphery) of the reactor main body 2 so that a stirring zone 4 provided inside the reactor main body 2 can be heated.

When implementing the production method A, the hydrocarbon gas is fed to the fluidized-bed reactor to produce a gas stream.

The hydrocarbon gas is preferably fed to the fluidized-bed reactor in a preheated state. In this case, the preheating temperature is preferably 400°C or more, more preferably 450°C or more, and still more preferably 480°C or more. The preheating temperature is preferably 600°C or less, more preferably 550°C or less, and still more preferably 520°C or less.

The hydrocarbon gas is preferably fed to the fluidized-bed reactor at 6.5 Nm³/h or more, more preferably 7.0 Nm³/h or more, and still more preferably 7.5 Nm³/h or more, based on 100 g of the raw material carbon black. The hydrocarbon gas is preferably fed to the fluidized-bed reactor at 8.5 Nm³/h or less, more preferably 8.0 Nm³/h or less, and still more preferably 7.8 Nm³/h or less, based on 100 g of the raw material carbon black.

The production method A can form aggregates having the desired voids by controlling the feed rate of the hydrocarbon gas, and easily produce carbon black for which the aggregate void modal diameter Dmp and the ratio of the half-width ΔDmp of the aggregate void diameter distribution to the aggregate void modal diameter Dmp are controlled within the desired ranges.

The hydrocarbon gas is preferably fed to the fluidized-bed reactor so that the gas inlet pressure is 1.0 MPa or more, more preferably 1.1 MPa or more, and still more preferably 1.2 MPa or more. The hydrocarbon gas is preferably fed to the fluidized-bed reactor so that the gas inlet pressure is 2.0 MPa or less, more preferably 1.8 MPa or less, and still more preferably 1.5 MPa or less.

When implementing the production method A using the fluidized-bed reactor illustrated in FIG. 2, the hydrocarbon gas is fed through the gas inlet 21.

When implementing the production method A, the hydrocarbon gas may be fed in a state in which the raw material carbon black has been introduced into the reactor, or the raw material carbon black may be introduced through an inlet that is separately provided to the reactor after feeding the hydrocarbon gas to the reactor.

A commercially-available product (e.g., HAF (N330) or ISAF (N220)) may be appropriately used as the raw material carbon black.

When implementing the production method A, the raw material carbon black introduced into the reactor is stirred and fluidized with heating due to the gas stream of the hydrocarbon gas.

The heating temperature is preferably 500°C or more, more preferably 550°C or more, and still more preferably 600°C or more. The heating temperature is preferably 750°C or less, more preferably 720°C or less, and still more preferably 700°C or less.

The stirring-fluidizing time is preferably 100 seconds or more, more preferably 110 seconds or more, and still more preferably 120 seconds or more. The stirring-fluidizing time is preferably 300 seconds or less, more preferably 280 seconds or less, and still more preferably 250 seconds or less.

When implementing the production method A using the fluidized-bed reactor illustrated in FIG. 2, the raw material carbon black is stirred and mixed in the stirring zone 4 that is heated using the heater coil 2 after feeding the hydrocarbon gas through the gas inlet 21.

When the hydrocarbon gas is fed to the reactor with heating, and the raw material carbon black is stirred and fluidized due to the gas stream of the hydrocarbon gas (i.e., when the hydrocarbon gas has come in contact with the raw material carbon black), the hydrocarbon gas that has undergone pyrolysis is deposited on the surface of the aggregates of the raw material carbon black, and the fusion and the aggregation of the aggregates are promoted by stirring due to the gas stream of the hydrocarbon gas. It is considered that carbon black that forms large aggregates can thus be obtained while maintaining the primary particle size of the carbon black.

When implementing the production method A using the fluidized-bed reactor 1 illustrated in FIG. 2, the hydrocarbon gas is fed through the gas inlet 21 provided at the bottom of the reactor 1 while heating the reactor 1 using the heater coil 3, and the raw material carbon black is stirred and fluidized in the stirring zone 4 due to the gas stream of the hydrocarbon gas (i.e., the hydrocarbon gas has come in contact with the raw material carbon black). In this case, the hydrocarbon gas that has undergone pyrolysis is deposited on the surface of the aggregates of the raw material carbon black in the stirring zone 4, and the fusion and the aggregation of the aggregates are promoted by stirring due to the gas stream of the hydrocarbon gas. It is considered that the desired carbon black can thus be obtained.

After stirring the raw material carbon black using the hydrocarbon gas, the feeding of the hydrocarbon gas is stopped, and the resulting carbon black is allowed to cool preferably while introducing nitrogen gas to terminate the reaction.

The nitrogen gas is preferably fed to the fluidized-bed reactor at 6.5 Nm³/h or more, more preferably 7.0 Nm³/h or more, and still more preferably 7.5 Nm³/h or more. The nitrogen gas is preferably fed to the fluidized-bed reactor at 8.5 Nm³/h or less, more preferably 8.0 Nm³/h or less, and still more preferably 7.8 Nm³/h or less.

The carbon black particles (that have been allowed to cool) are separated and collected using a separation-collection unit (e.g., cyclone or bag filter) to collect the desired carbon black.

The production method A can easily produce the carbon black according to one embodiment of the invention that can highly reinforce a rubber when used as a component of a rubber composition, and reduce heat buildup.

The production method A can easily produce the carbon black according to one embodiment of the invention by fusing the raw material carbon black using the fluidized-bed reactor.

It is thus possible to provide a novel carbon black that can improve rubber properties (e.g., degree of reinforcement and heat buildup).

A rubber composition according to one embodiment of the invention is described below.

The rubber composition according to one embodiment of the invention includes a rubber component, and the carbon black according to one embodiment of the invention in a ratio of 30 to 100 parts by mass based on 100 parts by mass of the rubber component.

The rubber component that is included in the rubber composition according to one embodiment of the invention may be at least one rubber component selected from a natural rubber and a diene-based rubber such as a styrene-butadiene rubber, a polybutadiene rubber, an isoprene rubber, a butyl rubber, a chloroprene rubber, and an acrylonitrile-butadiene copolymer rubber, for example.

The rubber composition according to one embodiment of the invention includes the carbon black according to one embodiment of the invention. The details of the carbon black included in the rubber composition are the same as described above.

It is considered that the carbon black according to one embodiment of the invention ensures that the rubber composition exhibits low heat buildup while being sufficiently reinforced since the carbon black according to one embodiment of the invention has an aggregate void modal diameter Dmp that falls within the specific range, and a ratio "ΔDmp/modal diameter Dmp" that falls within the specific range.

The rubber composition according to one embodiment of the invention includes the carbon black according to one embodiment of the invention in a ratio of 30 parts by mass or more, and preferably 35 parts by mass or more, based on 100 parts by mass of the rubber component. The rubber composition according to one embodiment of the invention includes the carbon black according to one embodiment of the invention in a ratio of 100 parts by mass or less, preferably 90 parts by mass or less, and more preferably 80 parts by mass or less, based on 100 parts by mass of the rubber component.

When the rubber composition according to one embodiment of the invention includes the carbon black according to one embodiment of the invention in a ratio within the above range, the rubber composition according to one embodiment of the invention exhibits low heat buildup and the like while being sufficiently reinforced.

The rubber composition according to one embodiment of the invention preferably includes the rubber component and the carbon black according to one embodiment of the invention in a ratio of 60 mass% or more, more preferably 70 mass% or more, and still more preferably 75 mass% or more in total. The rubber composition according to one embodiment of the invention preferably includes the rubber component and the carbon black according to one embodiment of the invention in a ratio of 100 mass% or less, more preferably 99 mass% or less, still more preferably 98 mass% or less, and still more preferably 97 mass% or less in total.

The rubber composition according to one embodiment of the invention may include a commonly-used optional component such as an inorganic reinforcing material, a silane coupling agent, a vulcanizing agent, a vulcanization accelerator, an aging preventive, a vulcanization aid, a softener, and a plasticizer.

The rubber composition according to one embodiment of the invention preferably includes the optional component in a ratio of 1 mass% or more, more preferably 2 mass% or more, and still more preferably 3 mass% or more in total. The rubber composition according to one embodiment of the invention preferably includes the optional component in a ratio of 40 mass% or less, more preferably 30 mass% or less, and still more preferably 25 mass% or less in total.

The rubber composition according to one embodiment of the invention may be obtained by kneading the rubber component, the desired amount of the carbon black, and the desired amount of an optional component (e.g., inorganic reinforcing material, silane coupling agent, vulcanizing agent, vulcanization accelerator, aging preventive, vulcanization aid, softener, and plasticizer). The components may be kneaded using a known kneader (e.g., mixer or mill).

The rubber composition according to one embodiment of the invention may be formed to have the desired shape, and appropriately cured by heating at 130 to 180°C to obtain the desired rubber formed article.

Since the rubber composition according to one embodiment of the invention can produce a rubber that exhibits low heat buildup, and improve the degree of reinforcement and heat buildup in a well-balanced manner, the rubber composition according to one embodiment of the invention may suitably be used as a tire tread rubber composition.

The invention is further described below by way of examples. Note that the following examples are for illustration purposes only, and the invention is not limited to the following examples.

### Example 1

Carbon black was produced using a fluidized-bed reactor 1 as illustrated in FIG. 2 that had an approximately cylindrical shape and was configured so that the reactor axis extended in the vertical direction.

The housing and the inner wall of the fluidized-bed reactor 1 (see FIG. 2) were formed of SUS304 and mullite, respectively. A reactor main body 2 of the fluidized-bed reactor 1 had a gas inlet 21 (inner diameter: 50 mm) (through which a hydrocarbon gas is fed upward), and an outlet 22 (inner diameter: 30 mm) that was provided to the upper part of the reactor main body 2. The fluidized-bed reactor 1 had a heater coil 3 formed by helically winding a heating wire around the entire outer wall of the reactor main body 2 so as to heat a stirring zone 4 (inner diameter: 100 mm, height: 200 mm) provided inside the reactor main body 2 (see FIG. 2).

A SUS filter 5 (mesh size: 0.2 mm) was provided between the reactor main body 2 and the gas inlet 21.

100 g of raw material carbon black 1 (specific surface area by nitrogen adsorption: 90 m²/g, DBP absorption: 106 ml/100 g) was introduced into the stirring zone 4 of the fluidized-bed reactor 1, and the stirring zone 4 was heated to 700°C using the heater coil 3. A hydrocarbon gas (town gas 13A, specific gravity: 0.638, CH₄: 89.6%, calorific value: 45 MJ/m³) that was preheated to 500°C was fed at 7.2 Nm³/h through the gas inlet 21 (gas inlet pressure: 1.3 MPa) to stir and fluidize the raw material carbon black 1 for 2 minutes. The heating operation using the heater coil 3 was then stopped, and the resulting carbon black was allowed to cool at room temperature to obtain the target carbon black 1.

The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the carbon black 1 are listed in Table 1.

### Examples 2 to 6

Carbon blacks 2 to 6 were obtained in the same manner as in Example 1, except that raw material carbon black 2 (specific surface area by nitrogen adsorption: 120 m²/g, DBP absorption: 110 ml/100 g) (Example 2), raw material carbon black 3 (specific surface area by nitrogen adsorption: 101 m²/g, DBP absorption: 90 ml/100 g) (Example 3), raw material carbon black 4 (specific surface area by nitrogen adsorption: 75 m²/g, DBP absorption: 99 ml/100 g) (Example 4), raw material carbon black 5 (specific surface area by nitrogen adsorption: 70 m²/g, DBP absorption: 89 ml/100 g) (Example 5), or raw material carbon black 6 (specific surface area by nitrogen adsorption: 71 m²/g, DBP absorption: 84 ml/100 g) (Example 6), was used instead of the raw material carbon black 1.

The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the carbon blacks 2 to 6 are listed in Table 1.

### Comparative Example 1

Comparative carbon black 1 was obtained in the same manner as in Example 1, except that the feed rate of the hydrocarbon gas was changed from 7.2 Nm³/h to 0 Nm³/h (i.e., the hydrocarbon gas was not fed). The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the comparative carbon black 1 are listed in Table 2.

### Comparative Examples 2 to 4

Comparative carbon blacks 2 to 4 were obtained in the same manner as in Comparative Example 1, except that raw material carbon black 5 (specific surface area by nitrogen adsorption: 126 m²/g, DBP absorption: 125 ml/100 g) (Comparative Example 2), raw material carbon black 6 (specific surface area by nitrogen adsorption: 62 m²/g, DBP absorption: 81 ml/100 g) (Comparative Example 3), or raw material carbon black 7 (specific surface area by nitrogen adsorption: 100 m²/g, DBP absorption: 110 ml/100 g) (Comparative Example 4), was used instead of the raw material carbon black 1.

The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the comparative carbon blacks 2 to 4 are listed in Table 2.

**TABLE 1**

| | | Example 1 | Example 2 | Example 3 | Example 4 | Example 5 | Example 6 |
|---|---|---|---|---|---|---|---|
| Raw material carbon black | N₂SA (m²/g) | 90 | 120 | 101 | 75 | 70 | 71 |
| | DBP (ml/100 g) | 106 | 110 | 90 | 99 | 89 | 84 |
| Production conditions | Hydrocarbon gas feed rate (Nm³/h) | 7.2 | 7.2 | 7.2 | 7.2 | 7.2 | 7.2 |
| | N₂SA (m²/g) | 99 | 130 | 112 | 88 | 94 | 113 |
| | DBP (ml/100 g) | 108 | 128 | 106 | 111 | 106 | 99 |
| Carbon black | Modal diameter Dmp(nm) | 38.3 | 57.2 | 42.5 | 45.3 | 34.2 | 27.9 |
| | ΔDmp (nm) | 16.1 | 22.3 | 17.5 | 18.4 | 18.8 | 14.0 |
| | ΔDmp/modal diameter Dmp | 0.42 | 0.39 | 0.41 | 0.41 | 0.55 | 0.50 |

**TABLE 2**

| | | Comparative Example 1 | Comparative Example 2 | Comparative Example 3 | Comparative Example 4 |
|---|---|---|---|---|---|
| Raw material carbon black | N₂SA (m²/g) | 90 | 126 | 62 | 100 |
| | DBP (ml/100 g) | 106 | 125 | 81 | 110 |
| Production conditions | Hydrocarbon gas feed rate (Nm³/h) | 0 | 0 | 0 | 0 |
| | N₂SA (m²/g) | 90 | 126 | 62 | 100 |
| Comparative carbon black | DBP (ml/100g) | 106 | 125 | 81 | 110 |
| | Modal diameter Dmp(nm) | 26.6 | 29.5 | 24.1 | 28.7 |
| | ΔDmp (nm) | 6.7 | 7.0 | 6.6 | 6.2 |
| | ΔDmp/modal diameter Dmp | 0.25 | 0.24 | 0.27 | 0.22 |

### Examples 7 to 10

Carbon blacks 7 to 10 were obtained in the same manner as in Example 1, except that the feed rate of the hydrocarbon gas was changed to 6.7 Nm³/h (Example 7), 7.5 Nm³/h (Example 8), 8.0 Nm³/h (Example 9), or 8.2 Nm³/h (Example 10).

The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the carbon blacks 7 to 10 are listed in Table 3.

### Comparative Examples 5 to 8

Comparative carbon blacks 5 to 8 were obtained in the same manner as in Example 1, except that the feed rate of the hydrocarbon gas was changed to 5.0 Nm³/h (Comparative Example 5), 6.0 Nm³/h (Comparative Example 6), 9.4 Nm³/h (Comparative Example 7), or 10.5 Nm³/h (Comparative Example 8).

The specific surface area by nitrogen adsorption, the DBP absorption, the aggregate void modal diameter Dmp, the half-width ΔDmp of the aggregate void diameter distribution, and the ratio (ΔDmp/modal diameter Dmp) of the half-width ΔDmp of the aggregate void diameter distribution to the aggregate void modal diameter Dmp of the comparative carbon blacks 5 to 8 are listed in Table 4.

**TABLE 3**

| | | Example 7 | Example 8 | Example 9 | Example 10 |
|---|---|---|---|---|---|
| Raw material carbon black | N₂SA (m²/g) | 90 | 90 | 90 | 90 |
| | DBP (ml/100 g) | 106 | 106 | 106 | 106 |
| Production conditions | Hydrocarbon gas feed rate (Nm³/h) | 6.7 | 7.5 | 8.0 | 8.2 |
| Carbon black | N₂SA (m²/g) | 78 | 94 | 98 | 104 |
| | DBP (ml/100 g) | 110 | 112 | 122 | 108 |
| | Modal diameter Dmp(nm) | 45.3 | 42.3 | 46.1 | 36.3 |
| | ΔDmp (nm) | 15.4 | 15.8 | 16.0 | 15.1 |
| | ΔDmp/modal diameter Dmp | 0.34 | 0.37 | 0.35 | 0.42 |

**TABLE 4**

| | | Comparative Example 5 | Comparative Example 6 | Comparative Example 7 | Comparative Example 8 |
|---|---|---|---|---|---|
| Raw material carbon black | N₂SA (m²/g) | 90 | 90 | 90 | 90 |
| | DBP (ml/100 g) | 106 | 106 | 106 | 106 |
| Production conditions | Hydrocarbon gas feed rate (Nm³/h) | 5.0 | 6.0 | 9.4 | 10.5 |
| Comparative carbon black | N₂SA (m²/g) | 79 | 117 | 130 | 132 |
| | DBP (ml/100 g) | 100 | 116 | 128 | 125 |
| | Modal diameter Dmp(nm) | 42.4 | 45.0 | 48.6 | 67.0 |
| | ΔDmp (nm) | 11.3 | 11.0 | 29.5 | 33.3 |
| | ΔDmp/modal diameter Dmp | 0.27 | 0.24 | 0.61 | 0.50 |

As shown in Tables 1 to 4, carbon black having a certain aggregate void diameter distribution was obtained in Examples 1 to 10 and Comparative Examples 1 to 8.

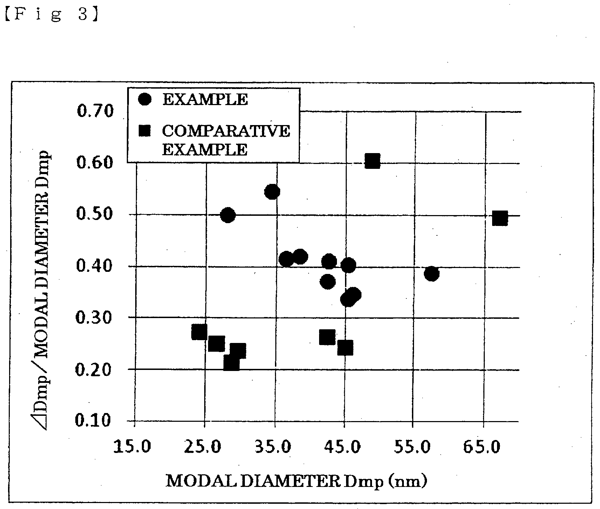

FIG. 3 illustrates the relationship between the aggregate void modal diameter Dmp and the ratio "ΔDmp/modal diameter Dmp" of the carbon blacks 1 to 10 obtained in Examples 1 to 10 and the comparative carbon blacks 1 to 8 obtained in Comparative Examples 1 to 8.

### Rubber composition production example

100 parts by mass of a natural rubber (RSS#1) (rubber component), 45 parts by mass of the carbon black obtained as described above, 3 parts by mass of stearic acid, 1 part by mass of an aging preventive ("Antage 6C" manufactured by Kawaguchi Chemical Industry Co., Ltd.), and 4 parts by mass of zinc oxide were kneaded using an internal mixer ("MIXTRON BB-2" manufactured by Kobe Steel, Ltd.). After the addition of 0.5 parts by mass of a vulcanization accelerator ("Accel NS" manufactured by Kawaguchi Chemical Industry Co., Ltd.) and 1.5 parts by mass of sulfur to the kneaded product, the mixture was kneaded using open rolls to obtain a rubber composition having the composition listed in Table 5.

**TABLE 5**

| Component | Ratio (parts by mass) |
|---|---|
| Natural rubber (RSS#1) | 100 |
| Carbon black | 45 |
| Stearic acid | 3 |
| Aging preventive | 1 |
| Zinc oxide | 4 |
| Vulcanization accelerator | 0.5 |
| Sulfur | 1.5 |

The rubber composition was vulcanized at 145°C for 35 minutes to obtain a vulcanized rubber.

The dynamic storage modulus (E') and the loss factor (tanδ) of the vulcanized rubber were measured as described below. The results are listed in Tables 6 to 9.

Note that the results for the dynamic storage modulus (E') and the loss factor (tanδ) are listed in Tables 6 to 9 corresponding to each carbon black (i.e., the carbon blacks 1 to 10 obtained in Examples 1 to 10 and the comparative carbon blacks 1 to 8 obtained in Comparative Examples 1 to 8).

### Dynamic storage modulus (E') and loss factor (tanδ)

A specimen (thickness: 2 mm, length: 35 mm, width: 5 mm) was cut from the vulcanized rubber, and the dynamic storage modulus (E') and the loss factor (tanδ) of the specimen were measured using a viscoelastic spectrometer ("VR-7110" manufactured by Ueshima Seisakusho Co., Ltd.) at a frequency of 50 Hz, a dynamic strain of 1.26%, and a temperature of 60°C.

Note that a high dynamic storage modulus (E') indicates that the degree of reinforcement is high, and a low loss factor (tanδ) indicates that the heat buildup is low.

**TABLE 6**

| | | Example 1 | Example 2 | Example 3 | Example 4 | Example 5 | Example 6 |
|---|---|---|---|---|---|---|---|
| Carbon black | N₂SA (m²/g) | 99 | 130 | 112 | 88 | 94 | 113 |
| | DBP (ml/100 g) | 108 | 128 | 106 | 111 | 106 | 99 |
| | Modal diameter Dmp(nm) | 38.3 | 57.2 | 42.5 | 45.3 | 34.2 | 27.0 |
| | Half-width ΔDmp (nm) | 16.1 | 22.3 | 17.5 | 18.4 | 18.8 | 14.0 |
| | ΔDmp/modal diameter Dmp | 0.42 | 0.39 | 0.41 | 0.41 | 0.55 | 0.50 |
| Rubber properties | E' (MPa) | 5.63 | 5.32 | 5.62 | 5.44 | 6.04 | 5.87 |
| | tanδ | 0.123 | 0.120 | 0.130 | 0.117 | 0.128 | 0.126 |

**TABLE 7**

| | | Comparative Example 1 | Comparative Example 2 | Comparative Example 3 | Comparative Example 4 |
|---|---|---|---|---|---|
| Comparative carbon black | N₂SA (m²/g) | 90 | 126 | 62 | 100 |
| | DBP (ml/100 g) | 106 | 125 | 81 | 110 |
| | Modal diameter Dmp(nm) | 26.6 | 29.5 | 24.1 | 28.7 |
| | Half-width ΔDmp (nm) | 6.7 | 7.0 | 6.6 | 6.2 |
| | ΔDmp/modal diameter Dmp | 0.25 | 0.24 | 0.27 | 0.22 |
| Rubber properties | E' (MPa) | 8.16 | 7.96 | 8.01 | 8.03 |
| | tanδ | 0.177 | 0.179 | 0.185 | 0.177 |

**TABLE 8**

| | | Example 7 | Example 8 | Example 9 | Example 10 |
|---|---|---|---|---|---|
| Carbon black | N₂SA (m²/g) | 78 | 94 | 98 | 104 |
| | DBP (ml/100 g) | 110 | 112 | 122 | 108 |
| | Modal diameter Dmp(nm) | 45.3 | 42.3 | 46.1 | 36.3 |
| | Half-width ΔDmp (nm) | 15.4 | 15.8 | 16.0 | 15.1 |
| | ΔDmp/modal diameter Dmp | 0.34 | 0.37 | 0.35 | 0.42 |
| Rubber properties | E' (MPa) | 5.66 | 6.21 | 5.87 | 6.31 |
| | tanδ | 0.125 | 0.131 | 0.129 | 0.138 |

**TABLE 9**

| | | Comparative Example 5 | Comparative Example 6 | Comparative Example 7 | Comparative Example 8 |
|---|---|---|---|---|---|
| Comparative carbon black | N₂SA(m²/g) | 79 | 117 | 130 | 132 |
| | DBP (ml/100 g) | 100 | 116 | 128 | 125 |
| | Modal diameter Dmp(nm) | 42.4 | 45.0 | 48.6 | 67.0 |
| | Half-width ΔDmp (nm) | 11.3 | 11.0 | 29.5 | 33.3 |
| | ΔDmp/modal diameter Dmp | 0.27 | 0.24 | 0.61 | 0.50 |
| Rubber properties | E' (MPa) | 6.31 | 7.49 | 3.86 | 3.46 |
| | tanδ | 0.158 | 0.175 | 0.120 | 0.122 |

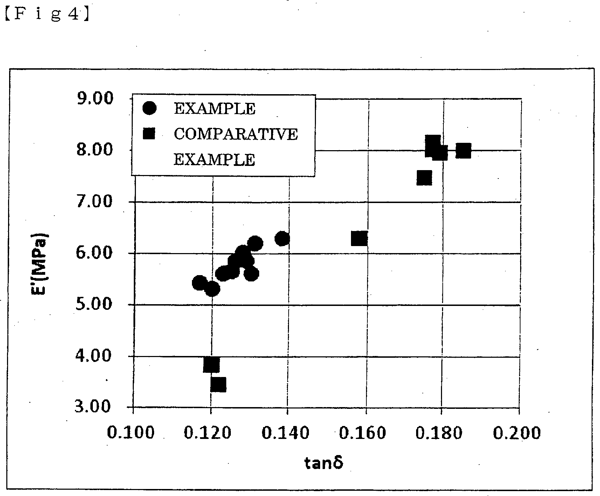

FIG. 4 illustrates the dynamic storage modulus (E') and the loss factor (tanδ) of the vulcanized rubber obtained using each carbon black (i.e., the carbon blacks 1 to 10 obtained in Examples 1 to 10 and the comparative carbon blacks 1 to 8 obtained in Comparative Examples 1 to 8).

As is clear from the results listed in Tables 6 and 8 and FIG. 4, the vulcanized rubbers obtained using the carbon blacks 1 to 10 obtained in Examples 1 to 10 having an aggregate void modal diameter Dmp of 25 to 60 nm, and having a ratio (ΔDmp/modal diameter Dmp) of the half-width ΔDmp of the aggregate void diameter distribution to the aggregate void modal diameter Dmp of 0.30 to 0.56, had a high dynamic storage modulus (E') and a low loss factor (tanδ) (i.e., had a high degree of reinforcement and exhibited low heat buildup in a well-balanced manner).

As is clear from the results listed in Tables 7 and 9 and FIG. 4, the vulcanized rubbers obtained using the comparative carbon blacks 1 to 8 obtained in Comparative Examples 1 to 8 having an aggregate void modal diameter Dmp that falls outside the range of 25 to 60 nm (Comparative Example 8), or having a ratio (ΔDmp/modal diameter Dmp) of the half-width ΔDmp of the aggregate void diameter distribution to the aggregate void modal diameter Dmp that falls outside the range of 0.30 to 0.56 (Comparative Examples 1 to 7), had a low dynamic storage modulus (E') (Comparative Examples 7 and 8) or a high loss factor (tanδ) (Comparative Examples 1 to 6) (i.e., had a low degree of reinforcement and exhibited high heat buildup).

### INDUSTRIAL APPLICABILITY

The embodiments of the invention thus provide a novel carbon black that can improve rubber properties (e.g., degree of reinforcement and heat buildup), and a rubber composition that exhibits improved rubber properties (e.g., degree of reinforcement and heat buildup).

The rubber composition according to the embodiments of the invention may particularly suitably be used as a rubber for producing a tire tread that is used under severe travel conditions.

### REFERENCE SIGNS LIST

- 1: Fluidized-bed reactor
- 2: Reactor main body
- 21: Gas inlet
- 22: Outlet
- 3: Heater coil
- 4: Stirring zone
- 5: Filter

## Claims

1. Carbon black having an aggregate void modal diameter Dmp determined by mercury porosimetry of 25 to 60 nm, and having a ratio (half-width ΔDmp of aggregate void diameter distribution/aggregate void modal diameter Dmp) of a half-width ΔDmp of an aggregate void diameter distribution determined by mercury porosimetry to the aggregate void modal diameter Dmp of 0.30 to 0.56.

2. The carbon black according to claim 1, the carbon black having a specific surface area by nitrogen adsorption of 60 to 180 m²/g and a DBP absorption of 90 to 140 ml/100 g.

3. A rubber composition comprising a rubber component, and the carbon black according to claim 1 in a ratio of 30 to 100 parts by mass based on 100 parts by mass of the rubber component.

4. A rubber composition comprising a rubber component, and the carbon black according to claim 2 in a ratio of 30 to 100 parts by mass based on 100 parts by mass of the rubber component.
